# EUROPEAN PATENT APPLICATION

(11) **EP 4 404 159 A1**
(43) Date of publication of application: **24.07.2024**
(21) Application number: 22866981.8
(22) Date of filing: 20.04.2022
(51) Int. Cl.: G07G 1/12

(54) **INFORMATION PROCESSING DEVICE, REGISTRATION SYSTEM, AND PROGRAM**

(30) Priority: 13.09.2021 JP 2021148876
(71) Applicant: Toshiba TEC Kabushiki Kaisha, Tokyo 141-8562 (JP)
(72) Inventor: HIYOSHI, Makoto, Izunokuni-shi, Shizuoka 410-2392 (JP)
(74) Representative: Bandpay & Greuter
(86) International application number: PCT/JP2022/018295
(87) International publication number: WO 2023/037650

(57) **Abstract**

An information processing apparatus according to an embodiment includes a transaction specifying information acquisition unit that acquires transaction specifying information associated with product identification information of a transaction target product, an identification information acquisition unit that acquires product identification information of an additional product to be added to a transaction corresponding to the transaction specifying information acquired by the transaction specifying information acquisition unit, and a storage processing unit that stores, in a storage unit, transaction information in which the transaction specifying information acquired by the transaction specifying information acquisition unit is associated with the product identification information of the additional product acquired by the identification information acquisition unit.

## Description

### FIELD

The present invention relates to an information processing apparatus, a registration system, and a program.

### BACKGROUND

Conventionally, a method called "pre-handling process" is known as a method of registering a product or a service (hereinafter collectively referred to as "product") to be purchased by a customer (e.g., Patent Literature 1). In the pre-handling process, product registration is performed in advance by a registration apparatus different from an accounting apparatus to which the customer makes payment. In addition, product registration is to store (register), in a storage device, product information such as a product code specifying a product to be purchased by a customer.

For example, the pre-handling process is used for registering in advance, by a registration apparatus, a product to be purchased by a customer standing in a line for a cash register by a POS terminal that performs product registration and accounting process, and for registering a product on each sales floor when a customer performs shopping on a plurality of sales floors so as to collectively pay at the time of leaving a shop.

In the pre-handling process, the registration apparatus issues an accounting code when the product is registered, and transmits the product information of the product registered and the accounting code issued to the server in association with each other. In addition, the registration apparatus issues a registration receipt on which a barcode indicating the accounting code is printed. When the customer makes a payment, the accounting apparatus reads the accounting code from the barcode printed on the registration receipt, acquires the product information corresponding to the accounting code from the server, and executes the accounting process.

On the other hand, there is a case where a customer uses the pre-handling process a plurality of times in one shopping occasion. For example, the pre-handling process is performed on each floor of a department store. In such a case, conventionally, an accounting code is issued and a registration receipt is printed every time the pre-handling process is performed.

When the accounting code newly issued in the second or subsequent pre-handling process is associated only with the product information of the product registered at that time in the pre-handling process, the accounting apparatus reads the accounting code from the barcode printed on each of the plurality of registration receipts and performs the accounting process. For this reason, it takes time and effort for an operator or the like to operate the accounting apparatus, and an erroneous operation of forgetting to read the barcode of any of the registration receipts is likely to occur. Furthermore, when the accounting code newly issued in the second or subsequent pre-handling process is associated with the product information of all the products registered until then, the accounting apparatus reads the accounting code from the barcode printed on the registration receipt issued last and performs the accounting process. In this case, the accounting code is read once, but an erroneous operation such as erroneously reading the accounting code from the barcode of the registration receipt issued first is likely to occur.

### SUMMARY OF THE INVENTION

### Problem to be Solved by the Invention

An object of the present invention is to provide an information processing apparatus, a registration system, and a program capable of suppressing erroneous operation.

### Means for Solving Problem

An information processing apparatus according to an embodiment includes a transaction specifying information acquisition unit that acquires transaction specifying information associated with product identification information of a transaction target product, an identification information acquisition unit that acquires product identification information of an additional product to be added to a transaction corresponding to the transaction specifying information acquired by the transaction specifying information acquisition unit, and a storage processing unit that stores, in a storage unit, transaction information in which the transaction specifying information acquired by the transaction specifying information acquisition unit is associated with the product identification information of the additional product acquired by the identification information acquisition unit.

### BRIEF DESCRIPTION OF DRAWINGS

FIG. 1 is a diagram illustrating an outline of a registration system according to an embodiment.
FIG. 2 is a diagram illustrating an example in which the registration system of the embodiment is applied to a shop.
FIG. 3 is a block diagram illustrating a hardware configuration of a POS terminal according to the embodiment.
FIG. 4 is a diagram illustrating a data configuration of transaction information stored in a transaction information storage unit of the POS terminal according to the embodiment.
FIG. 5 is a block diagram illustrating a functional configuration of a control unit of the POS terminal according to the embodiment.
FIG. 6 is a block diagram illustrating a hardware configuration of a server apparatus according to the embodiment.
FIG. 7 is a diagram illustrating a data configuration of a transaction management file stored in a memory unit of the server apparatus according to the embodiment.
FIG. 8 is a block diagram illustrating a functional configuration of a control unit of the server apparatus according to the embodiment.
FIG. 9 is a sequence chart illustrating a flow of operation of the registration system according to the embodiment.
FIG. 10 illustrates a registration receipt issued at the time of a first pre-handling process according to the embodiment.
FIG. 11 illustrates a registration receipt issued at the time of second and subsequent pre-handling processes according to the embodiment.
FIG. 12 is a flowchart illustrating a flow of an accounting code reading process by a control unit of the POS terminal according to the embodiment.
FIG. 13 is a flowchart illustrating a flow of an update process by a control unit of the server apparatus according to the embodiment.
FIG. 14 is a sequence chart illustrating a flow of an operation in a modification of the registration system according to the embodiment.

### DETAILED DESCRIPTION

Hereinafter, an information processing apparatus, a registration system, and a program according to an embodiment will be described with reference to the drawings. Note that the present invention is not limited by the embodiment described below. For example, in the embodiment described below, the registration apparatus capable of pre-handling is a point of sales (POS) terminal also equipped with a payment function, but the registration apparatus may have a registration function only. Further, in the embodiment described below, a dedicated server apparatus is provided, but any POS terminal may function as a server apparatus.

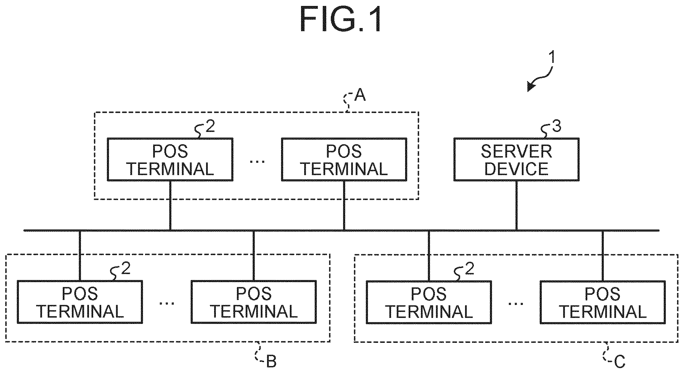

FIG. 1 is a diagram schematically illustrating a registration system 1. The registration system 1 of the present embodiment includes a plurality of POS terminals 2 provided in each of selling areas A to C, and a server apparatus 3 provided in a backyard. For example, in a shop, a selling area A is a selling area on the third floor, a selling area B is a selling area on the second floor, and a selling area C is a selling area on the first floor. Each of the POS terminals 2 and the server apparatus 3 are communicably connected to each other via a network such as a local area network (LAN).

Each POS terminal 2 has a function of executing product registration for a product to be purchased by the customer, and has a function of executing an accounting process based on information on the product registered. Each of the POS terminals 2 is an example of a registration apparatus having a pre-handling function. Each of the POS terminals 2 is also an accounting apparatus that executes the accounting process based on the product information registered in the pre-handling process. The pre-handling process is a process of performing product registration of a product to be purchased by the customer in advance by the registration apparatus different from the accounting apparatus that executes the accounting process. The product information is information related to a product, such as a product code, a product name, and a price.

The server apparatus 3 manages transaction information in which the product information including the product code registered by each POS terminal 2 in the pre-handling process is associated with an accounting code set for each transaction. Here, the product code is an example of product identification information for identifying a product, and the accounting code is an example of transaction specifying information for specifying a transaction.

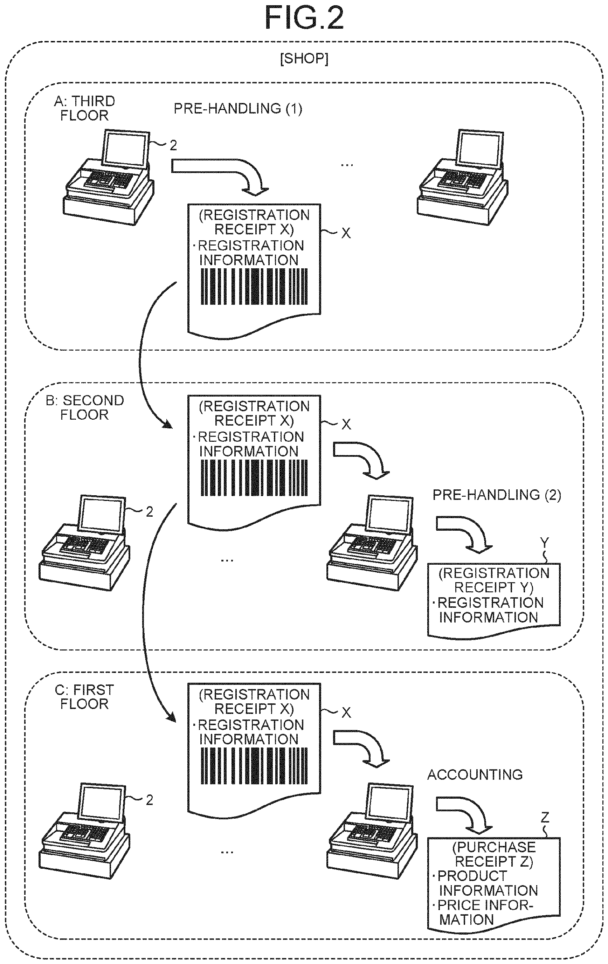

FIG. 2 is a diagram illustrating an example in which the registration system 1 is applied to a shop. For example, the customer selects a product to be purchased in the selling area A on the third floor, and brings the product to any one of the POS terminals 2 installed on the third floor. The POS terminal 2 performs product registration without accounting process, which is the pre-handling process. It is assumed that the pre-handling process executed at this time is the first time. When the product registration is completed, the POS terminal 2 issues an accounting code, and transmits, to the server apparatus 3, transaction information in which the accounting code issued and the product code of the product registered are associated with each other. Thereafter, the server apparatus 3 manages the transaction information using the accounting code as a key.

Further, the POS terminal 2 issues a registration receipt X at the time of a first pre-handling process. On the registration receipt X, registration information such as a quantity of registered products and a total price (transaction amount) of the registered products, and a barcode indicating the accounting code are printed. The customer receives the registration receipt X and moves to another sales floor.

Next, when the customer selects a product to be purchased in the selling area B on the second floor and brings the product to one of the POS terminals 2 installed on the second floor, the POS terminal 2 executes a second pre-handling process. The POS terminal 2 reads the accounting code from the barcode of the registration receipt X, and acquires the product code corresponding to the accounting code from the server apparatus 3. Subsequently, the POS terminal 2 reads, with a scanner, a product code of the product in the selling area B carried by the customer and transmits the product code read and the product code acquired from the server apparatus 3 to the server apparatus 3 in association with the accounting code. The server apparatus 3 stores transaction information in which the product codes of the products in the selling area A and the selling area B to be purchased by the customer are associated with the accounting code issued at the time of the first pre-handling process. A product to be added to the transaction specified by the accounting code after the accounting code is issued, such as the product in the selling area B to be purchased by the customer, may be referred to as an "additional product" in the following description.

The POS terminal 2 issues a registration receipt Y at the time of the second pre-handling process. Registration information such as the total price (transaction amount) of the products registered in the selling area A and the selling area B is printed on the registration receipt Y. In the present embodiment, the barcode indicating the accounting code is not printed on the registration receipt Y, but the barcode may be printed similarly to the registration receipt X. The customer receives the registration receipt Y and moves to another sales floor.

Next, after the customer looks around the selling area C on the first floor, the payment can be made by any one of the POS terminals 2 installed on the first floor. The POS terminal 2 reads the accounting code from the barcode printed on the registration receipt X, acquires the product code corresponding to the accounting code from the server apparatus 3, and executes the accounting process. The POS terminal 2 issues a purchase receipt Z as part of the accounting process. The purchase receipt Z is a normal receipt issued after the transaction is completed, and product information such as a product name and quantity, and price information such as a unit price, tax, and a transaction amount are printed on the purchase receipt Z. It is also possible to register an additional product at the time of accounting.

As described above, in the registration system 1 of the present embodiment, even when the pre-handling process is performed a plurality of times, one accounting code is issued. In other words, the registration system 1 associates the product code registered in the subsequent pre-handling process with the accounting code issued in the first pre-handling process.

Next, the POS terminal 2 will be described in detail. The POS terminal 2 is a general POS terminal with which a shop clerk performs a product registration operation and an accounting process operation. The POS terminal 2 may be a so-called self-POS terminal with which a customer performs the product registration operation and the accounting process operation.

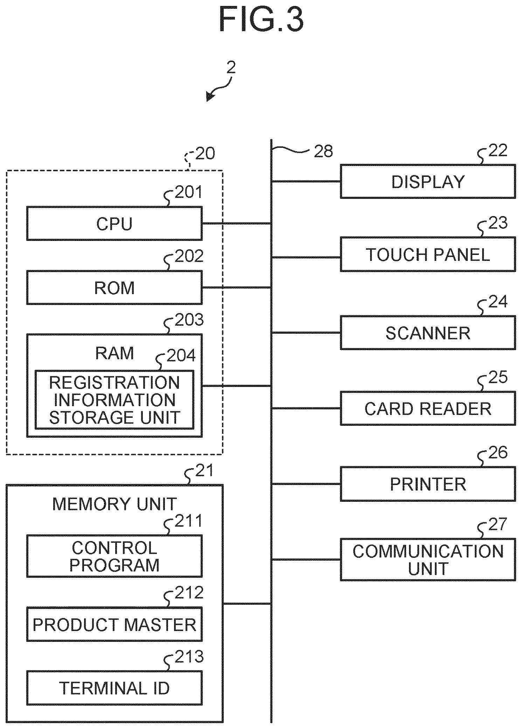

FIG. 3 is a block diagram illustrating a main hardware configuration of the POS terminal 2. The POS terminal 2 includes a control unit 20, a memory unit 21, a display 22, a touch panel 23, a scanner 24, a card reader 25, a printer 26, and a communication unit 27. The control unit 20, the memory unit 21, the display 22, the touch panel 23, the scanner 24, the card reader 25, the printer 26, and the communication unit 27 are connected to one another via a bus 28 or the like.

The control unit 20 includes a computer including a central processing unit (CPU) 201, a read only memory (ROM) 202, and a random access memory (RAM) 203. The CPU 201, the ROM 202, and the RAM 203 are connected to each other via the bus 28.

The CPU 201 controls the overall operation of the POS terminal 2. The ROM 202 stores various programs such as programs used to drive the CPU 201 and various types of data. The RAM 203 includes a registration information storage unit 204. The RAM 203 is used as a work area of the CPU 201, and develops various programs and various types of data stored in the ROM 202 and the memory unit 21. The control unit 20 executes various control processes of the POS terminal 2 by the CPU 201 operating according to a control program stored in the ROM 202 or the memory unit 21 and developed in the RAM 203.

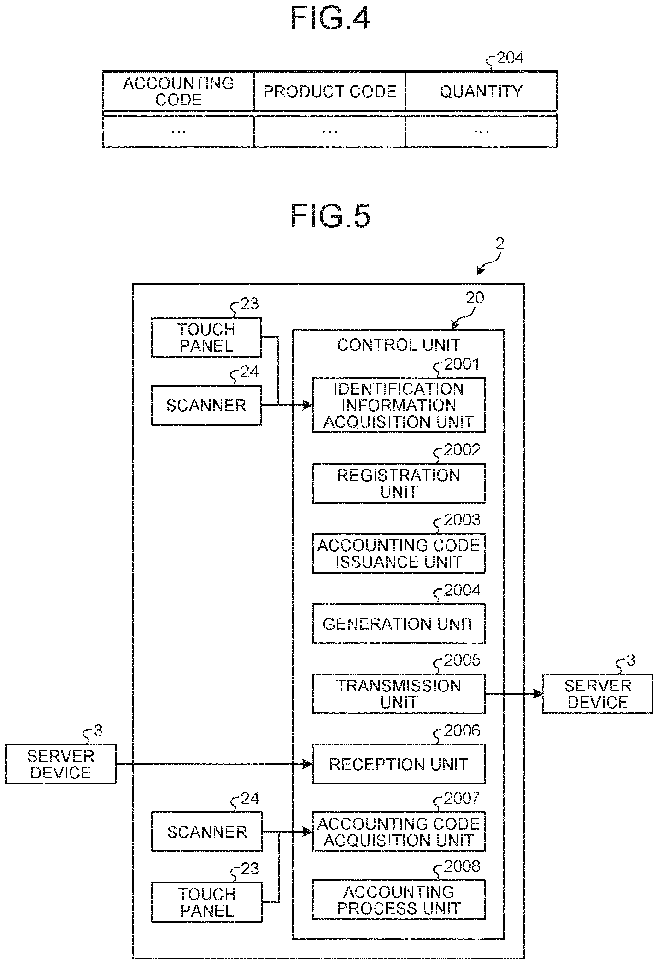

The registration information storage unit 204 of the RAM 203 is an area for storing information on a product whose product registration has been performed. FIG. 4 is a diagram illustrating a data configuration of information stored in the registration information storage unit 204. Each piece of data registered in the registration information storage unit 204 is associated with each piece of information indicating an accounting code, a product code, and a quantity. The registration information storage unit 204 stores information including transaction information in which the accounting code and the product code are associated with each other, and is an example of a storage unit.

The accounting code for specifying the transaction is registered in the item of the accounting code. The accounting code is issued and registered by the control unit 20 at the time of the first pre-handling process. In the case of product registration that is not the pre-handling process, the accounting code is not registered. A product code for identifying a product is registered in the item of the product code. The product code is read from a barcode attached to the product by the scanner 24, or is input to the touch panel 23 by an operation of an operator and registered in the registration information storage unit 204. Information indicating a quantity of products indicated by the corresponding product code is registered in the quantity item. Information based on the number of times the corresponding product code is read by the scanner 24 or the number designated on the touch panel 23 is registered in the quantity item. Note that, when a plurality of types of products is purchased in one transaction, information indicating a plurality of product codes and quantity is registered for one accounting code. In addition, information indicating a product price may be registered corresponding to each product code, and further, a transaction amount may be registered corresponding to the accounting code.

The description returns to FIG. 3. The memory unit 21 includes a storage medium such as a hard disk drive (HDD) or a flash memory, and maintains the stored contents even when the power is turned off. The memory unit 21 stores a control program 211, a product master 212, and a terminal ID 213.

The control program 211 is a program for causing the POS terminal 2 to function as a product registration apparatus and an accounting apparatus capable of performing the pre-handling process. In other words, the control program 211 is a program for realizing a function of performing product registration based on the product code or the like read by the scanner 24, a function of issuing the accounting code for a transaction of the product whose product registration has been performed, a function of transmitting and receiving information to and from the server apparatus 3, a function of executing the accounting process, and the like.

The product master 212 is a master file in which the product code and other product information (product name, price, etc.) are associated with each other for products handled in a shop. The product master 212 is received from the server apparatus 3 via the communication unit 27. Since the product handled in the shop changes every day, the product master 212 is appropriately updated based on the information from the server apparatus 3.

The terminal ID 213 is information for identifying the POS terminal 2. The terminal ID 213 is set when the POS terminal 2 is connected to the registration system 1.

The display 22 includes, for example, a liquid crystal panel, and functions as a display unit that displays various types of information. The display 22 displays, for example, the product information of the product whose product registration has been performed, an operation element for the operator to operate, and the like.

The touch panel 23 is provided on a surface of the display 22, and inputs information corresponding to a touched position to the control unit 20 of the POS terminal 2. The touch panel 23 is used, for example, for input of the product code and instruction input of the pre-handling process. The touch panel 23 is an example of the input device. Note that a keyboard may be provided as the input device in addition to or instead of the touch panel 23.

The scanner 24 reads the product code from a code symbol such as a barcode attached to the product. The scanner 24 inputs the product code read to the control unit 20, and is an example of the input device. In addition, the scanner 24 reads the accounting code from the barcode printed on the registration receipt X. The scanner 24 may be fixedly provided on a main body of the POS terminal 2 or may be a handy-type scanner detachably provided.

The card reader 25 reads a membership code from a medium such as a membership card or a reward card of the customer. In addition, the card reader 25 reads customer information necessary for credit card payment from a customer's credit card. The card reader 25 may be a magnetic card reader that reads information from a magnetic card, or may be an IC card reader that reads information from a card with built-in IC chip.

The printer 26 prints various receipts based on an instruction from the control unit 20. For example, the printer 26 prints the registration receipt X at the time of the first pre-handling process and prints the registration receipt Y at the time of the second and subsequent pre-handling processes. In addition, the printer 26 prints the purchase receipt at the time of accounting process.

The communication unit 27 is an interface for communicating with an external device such as the server apparatus 3. The control unit 20 can transmit and receive information (data) to and from the external device by being connected to the external device via the communication unit 27.

Next, a functional configuration of the control unit 20 of the POS terminal 2 will be described. FIG. 5 is a block diagram illustrating a main functional configuration of the control unit 20 of the POS terminal 2. The control unit 20 functions as an identification information acquisition unit 2001, a registration unit 2002, an accounting code issuance unit 2003, a generation unit 2004, a transmission unit 2005, a reception unit 2006, an accounting code acquisition unit 2007, and an accounting process unit 2008 by the CPU 201 operating according to the control program stored in the ROM 202 or the memory unit 21. Each of these functions may be configured by hardware such as a dedicated circuit. In addition, although two server apparatuses 3 are illustrated in FIG. 5 for convenience, they are identical. Similarly, although two touch panels 23 and two scanners 24 are illustrated, they are identical.

The identification information acquisition unit 2001 acquires the product identification information input to the input device. Specifically, the identification information acquisition unit 2001 acquires the product code read by the scanner 24 and the product code input to the touch panel 23.

In addition, the identification information acquisition unit 2001 acquires the product identification information of an additional product to be added to the transaction corresponding to the transaction specifying information acquired by the transaction specifying information acquisition unit. Specifically, the identification information acquisition unit 2001 acquires the product code of the product to be added to the transaction specified by the accounting code acquired by the accounting code acquisition unit 2007 by acquiring the product code read by the scanner 24 and the product code input to the touch panel 23 in the second and subsequent pre-handling processes.

The registration unit 2002 executes product registration. For example, the registration unit 2002 registers the product code acquired by the identification information acquisition unit 2001 in the registration information storage unit 204. Note that the registration unit 2002 may read the product information such as the product name and the price from the product master 212 based on the product code acquired by the identification information acquisition unit 2001, and register the product information read in the registration information storage unit 204.

In addition, the registration unit 2002 registers, in the registration information storage unit 204, information indicating a quantity of the registered product, in other words, a purchase quantity of the product specified by the product code based on an input from the touch panel 23 or the scanner 24. Further, the registration unit 2002 registers the accounting code issued by the accounting code issuance unit 2003 in the registration information storage unit 204 at the time of the first pre-handling process.

As described above, the registration unit 2002 stores the information including the transaction information in which the accounting code and the product code are associated in the registration information storage unit 204, and can be regarded as an example of a storage process unit. Note that the registration unit 2002 may register transaction information in which the accounting code and the product code are associated with each other in an external memory.

The accounting code issuance unit 2003 issues the accounting code at the time of the first pre-handling process. For example, the accounting code issuance unit 2003 issues the accounting code when the control unit 20 receives an instruction of the pre-handling process after the product registration by the registration unit 2002.

The generation unit 2004 generates the transaction information in which the product identification information received by the reception unit 2006 and the product identification information acquired by the identification information acquisition unit 2001 are associated with the transaction specifying information acquired by the transaction specifying information acquisition unit. Specifically, the generation unit 2004 generates the transaction information by associating the accounting code acquired by the accounting code acquisition unit 2007 with the product code received by the reception unit 2006 from the server apparatus 3 and the product code acquired by the identification information acquisition unit 2001 from the touch panel 23 or the scanner 24. In other words, the generation unit 2004 associates the already-registered product code acquired from the server apparatus 3 and the product code of the newly registered additional product with the accounting code acquired by the accounting code acquisition unit 2007 at the time of the second or subsequent pre-handling process or at the time of accounting of a transaction including the pre-handling process.

The transmission unit 2005 transmits the transaction specifying information acquired by the transaction specifying information acquisition unit, the product identification information received by the reception unit 2006, and the product identification information acquired by the identification information acquisition unit 2001 to the server apparatus 3. Specifically, the transmission unit 2005 transmits information including the accounting code acquired by the accounting code acquisition unit 2007, the product code received by the reception unit 2006, and the product code acquired by the identification information acquisition unit 2001 to the server apparatus 3. In the present embodiment, the transmission unit 2005 transmits the transaction information in which the accounting code and the product code are associated with each other to the server apparatus 3, but the accounting code and the product code may be separately transmitted. In this case, the server apparatus 3 generates the transaction information. The transmission unit 2005 transmits other various types of information to the server apparatus 3. When transmitting the information to the server apparatus 3, the transmission unit 2005 also transmits the terminal ID.

Note that, as in a modification described later, when the reception unit 2006 does not receive the product code registered in the first pre-handling process from the server apparatus 3, the transmission unit 2005 transmits the accounting code acquired by the accounting code acquisition unit 2007 and the product code acquired by the identification information acquisition unit 2001 to the server apparatus 3.

The reception unit 2006 receives the product identification information corresponding to the transaction specifying information acquired by the transaction specifying information acquisition unit from the server apparatus 3. Specifically, the reception unit 2006 receives the product code associated with the accounting code acquired by the accounting code acquisition unit 2007 from the server apparatus 3. The reception unit 2006 receives other various types of information from the server apparatus 3.

The accounting code acquisition unit 2007 acquires the transaction specifying information associated with the product identification information of the product to be purchased. Specifically, the accounting code acquisition unit 2007 acquires the accounting code read by the scanner 24 from the barcode printed on the registration receipt X or the accounting code input to the touch panel 23. The accounting code acquisition unit 2007 is an example of the transaction specifying information acquisition unit.

In a transaction including the pre-handling process, the accounting process unit 2008 executes the accounting process based on the product identification information received by the reception unit 2006. Specifically, when there is an additional product at the time of accounting, the accounting process unit 2008 executes the accounting process based on the product code received by the reception unit 2006 and the product code acquired by the identification information acquisition unit 2001. Furthermore, when there is no additional product at the time of accounting, the accounting process unit 2008 executes the accounting process based on only the product code received by the reception unit 2006. Furthermore, in the transaction not including the pre-handling process, the accounting process unit 2008 executes the accounting process based only on the product code acquired by the identification information acquisition unit 2001.

The accounting process executed by the POS terminal 2 is a process for paying the price of the product to be purchased by the customer, and includes a process such as calculation of a total price of transaction, calculation of a change amount in cash payment, acquisition of the customer information in cashless payment, and printing of the purchase receipt Z after completion of payment.

The POS terminal 2 is an example of the information processing apparatus and includes the transaction specifying information acquisition unit (accounting code acquisition unit 2007) that acquires the transaction specifying information (accounting code) associated with the product identification information (product code) of a transaction target product, the identification information acquisition unit 2001 that acquires the product identification information of an additional product to be added to the transaction corresponding to the transaction specifying information acquired by the transaction specifying information acquisition unit, and the storage processing unit (registration unit 2002) that stores, in the storage unit (registration information storage unit 204), the transaction information in which the transaction specifying information acquired by the transaction specifying information acquisition unit and the product identification information of the additional product acquired by the identification information acquisition unit 2001 are associated with each other. Note that the server apparatus 3 can be the information processing apparatus by providing the same function to the server apparatus 3.

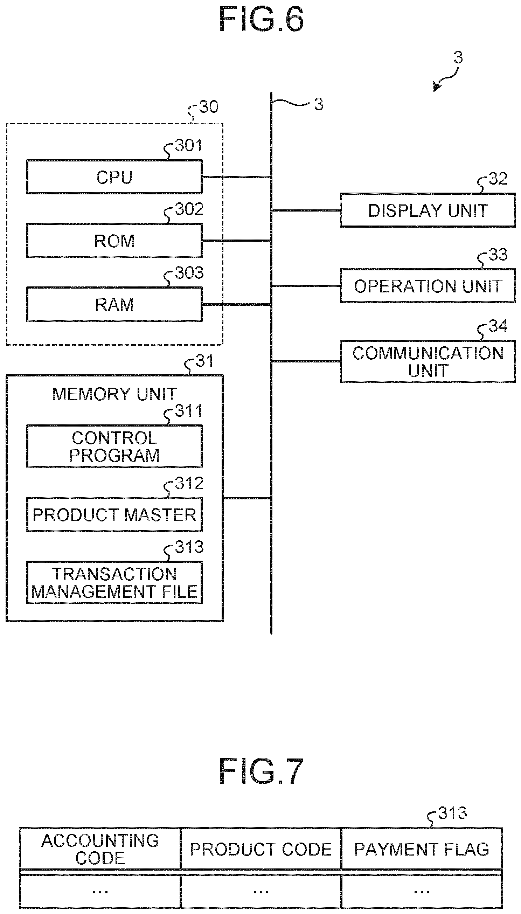

Next, the server apparatus 3 will be described. FIG. 6 is a block diagram illustrating a main hardware configuration of the server apparatus 3. The server apparatus 3 includes a control unit 30, a memory unit 31, a display unit 32, an operation unit 33, and a communication unit 34. The control unit 30, the memory unit 31, the display unit 32, the operation unit 33, and the communication unit 34 are connected to each other via a bus 35 or the like.

The control unit 30 includes a computer including a CPU 301, a ROM 302, and a RAM 303. The CPU 301, the ROM 302, and the RAM 303 are connected to each other via the bus 35.

The CPU 301 controls the entire operation of the server apparatus 3. The ROM 302 stores various programs such as programs used to drive the CPU 301 and various types of data. The RAM 303 is used as a work area of the CPU 301, and develops various programs and various data stored in the ROM 302 and the memory unit 31. The control unit 30 executes various control processes of the server apparatus 3 by the CPU 301 operating according to the control program stored in the ROM 302 or the memory unit 31 and developed in the RAM 303.

The memory unit 31 includes a storage medium such as an HDD or a flash memory, and maintains the content stored even when the power is turned off. The memory unit 31 stores a control program 311, a product master 312, and a transaction management file 313.

The control program 311 is a program or the like for realizing a function of managing the transaction information in which the product code registered in the POS terminal 2 is associated with the accounting code set for each transaction. The control program 311 may include the program or the like for realizing a function of managing sales of the shop.

Since the product master 312 is the same master file as the product master 212 stored in the memory unit 21 of the POS terminal 2, detailed description thereof will be omitted.

The transaction management file 313 is a file for managing a transaction for which the pre-handling process has been performed in each POS terminal 2. The transaction management file 313 is appropriately updated based on information from each POS terminal 2. FIG. 7 is a diagram illustrating a data configuration of the transaction management file 313. Each piece of data registered in the transaction management file 313 is associated with each piece of information indicating the accounting code, the product code, and a payment flag. It can be said that the information stored in the transaction management file 313 is an example of the transaction information, and the memory unit 31 storing the transaction management file 313 is an example of the storage unit. In addition, the transaction management file 313 stores the transaction information transmitted from the transmission unit 2005 of the POS terminal 2. In other words, the transmission unit 2005 of the POS terminal 2 has a function of storing the transaction information in the transaction management file 313, and can also be said as an example of the storage processing unit in the information processing apparatus.

The accounting code for specifying the transaction is registered in the item of the accounting code. The accounting code is transmitted from the POS terminal 2 at the time of the first pre-handling process. A product code for identifying a product is registered in the item of the product code. The product code is transmitted from the POS terminal 2. When a plurality of types of products is purchased in one transaction, a plurality of product codes are associated with one accounting code. In the item of the payment flag, the payment flag indicating whether the payment of the transaction specified by the accounting code is completed is registered. Since the payment of the transaction is not completed when the accounting code and the product code are registered at the time of the first pre-handling process, "0" is registered in the payment flag. When a payment completion notification is received from the POS terminal 2, the payment flag is rewritten to " 1" by the control unit 30.

The description returns to FIG. 6. The display unit 32 includes, for example, a liquid crystal panel, and displays various types of information. The display unit 32 displays, for example, information stored in the transaction management file 313.

The operation unit 33 has a function of inputting information to the control unit 30. The operation unit 33 includes a touch panel, a keyboard, a mouse, and the like provided on the surface of the display unit 32.

The communication unit 34 is an interface for communicating with an external device such as each POS terminal 2. The control unit 30 can transmit and receive information (data) to and from the external device by being connected to the external device via the communication unit 34.

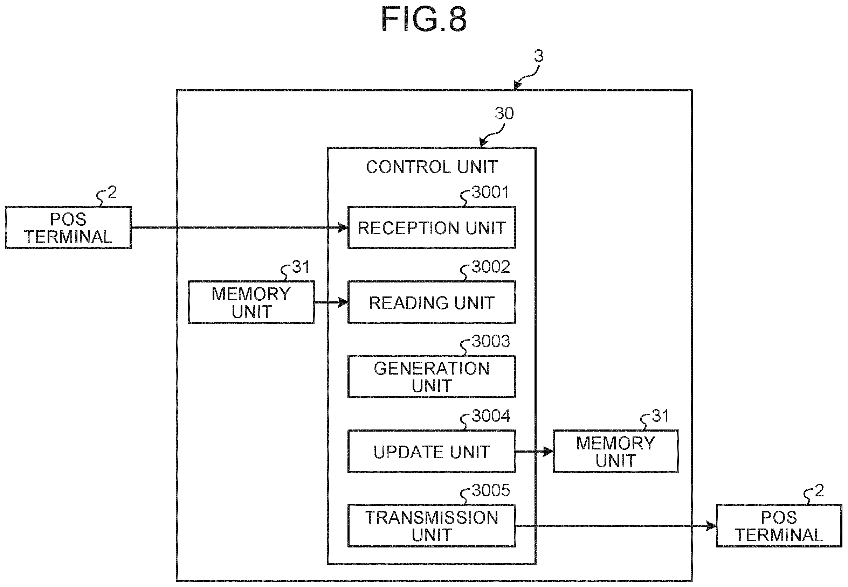

Next, a functional configuration of the control unit 30 of the server apparatus 3 will be described. FIG. 8 is a block diagram illustrating a main functional configuration of the control unit 30 of the server apparatus 3. The control unit 30 functions as a reception unit 3001, a reading unit 3002, a generation unit 3003, an update unit 3004, and a transmission unit 3005 by the CPU 301 operating according to a control program stored in the ROM 302 or the memory unit 31. Each of these functions may be configured by hardware such as a dedicated circuit. In addition, although two POS terminals 2 are illustrated in FIG. 8 for convenience, they are identical. Similarly, although two memory units 31 are illustrated, they are identical.

The reception unit 3001 receives various types of information from each POS terminal 2. For example, the reception unit 3001 receives information regarding the transaction such as the terminal ID, the accounting code, the product code, and the payment completion notification from each POS terminal 2.

The reading unit 3002 reads the product code corresponding to the accounting code received by the reception unit 3001 from the transaction management file 313 that stores the accounting code and the product code in association with each other.

The generation unit 3003 generates the transaction information based on the accounting code received by the reception unit 3001 from the POS terminal 2 and the product code of the additional product to be added to the transaction specified by the accounting code. When the reception unit 3001 receives the product code of the additional product newly registered together with the accounting code from the POS terminal 2 at the time of the second or subsequent pre-handling process or at the time of accounting of the transaction including the pre-handling process, the generation unit 3003 associates the product code registered in the transaction management file 313 with the product code received by the reception unit 3001 using the accounting code as a key. As a result, the generation unit 3003 generates the transaction information in which the product code already registered in the transaction management file 313 and the product code newly registered in the POS terminal 2 are associated with the accounting code acquired by the accounting code acquisition unit 2007. The generation unit 3003 functions in the modification described later.

The update unit 3004 updates the transaction information based on the transaction specifying information and the product identification information transmitted from the transmission unit 2005 of the POS terminal 2. Specifically, the update unit 3004 updates the transaction management file 313 based on the accounting code and the product code transmitted from the transmission unit 2005 of the POS terminal 2.

The update unit 3004 updates the transaction information by adding the product identification information transmitted from the transmission unit 2005 of the POS terminal 2 to the product identification information corresponding to the transaction specifying information transmitted from the transmission unit 2005 in the transaction information. Specifically, the update unit 3004 adds the product code transmitted from the transmission unit 2005 of the POS terminal 2 to the product code stored in the transaction management file 313 in association with the accounting code transmitted from the transmission unit 2005. As a result, the product code corresponding to the accounting code transmitted from the transmission unit 2005 of the POS terminal 2 is added, and the transaction management file 313 is updated.

The transmission unit 3005 transmits various types of information to each POS terminal 2. For example, the transmission unit 3005 transmits an additional registration permission notification to the POS terminal 2. The additional registration permission notification is transmitted when the accounting code transmitted from the POS terminal 2 is registered in the transaction management file 313 as unpaid at the time of the second or subsequent pre-handling process or accounting. In other words, when there is a transaction in which a product to be purchased can be added at the time of the second and subsequent pre-handling processes or at the time of accounting, the transmission unit 3005 transmits the additional registration permission notification to the POS terminal 2.

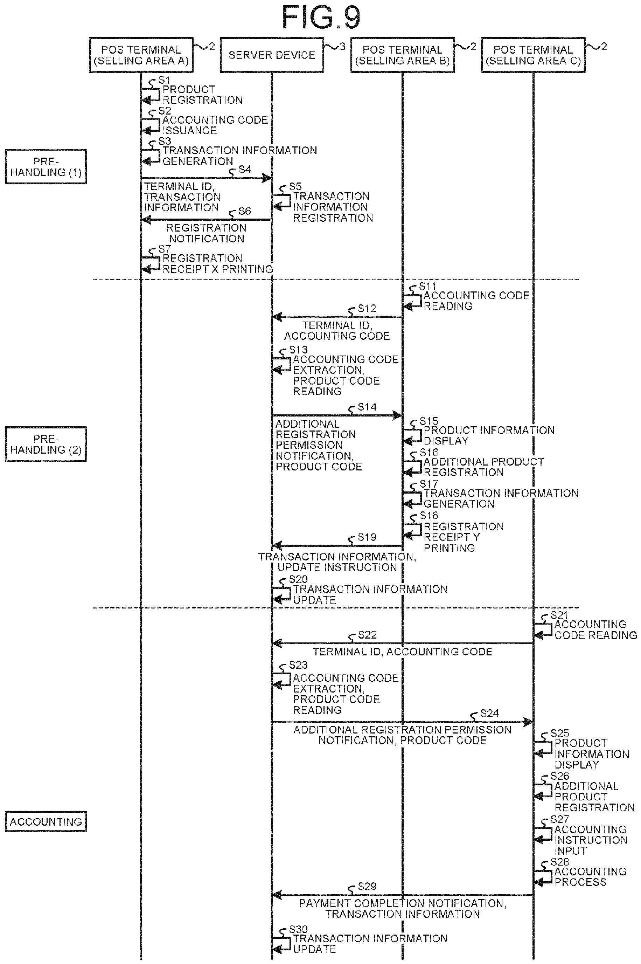

An outline of an operation of the registration system 1 having the above configuration will be described. FIG. 9 is a sequence chart illustrating a flow of the operation of the registration system 1. This sequence chart illustrates, as an example of the operation of the registration system 1, an operation when a product to be purchased is added at the time of accounting after two pre-handling processes have been executed.

First, the operation at the time of the first pre-handling process will be described. When the customer selects a product to be purchased in the selling area A and brings the product to the POS terminal 2, the product is registered by the POS terminal 2 in the selling area A (Step S1). When receiving the instruction to execute the pre-handling process after the product registration is completed, the POS terminal 2 issues the accounting code (Step S2).

Next, the POS terminal 2 generates the transaction information in which the product code registered in the product registration is associated with the accounting code issued (Step S3), and transmits the transaction information generated and the terminal ID stored in the memory unit 21 to the server apparatus 3 (Step S4).

The server apparatus 3 registers the transaction information received in the transaction management file 313 (Step S5). Subsequently, the server apparatus 3 transmits the registration notification indicating that the transaction information is registered to the POS terminal 2 specified by the terminal ID received (Step S6).

Upon receiving the registration notification, the POS terminal 2 prints the registration receipt X. Through the above process, the first pre-handling process is completed. At this time, it is desirable that the shop keeps the registered product and gives the product to the customer when the customer performs accounting. This is because the customer can easily shop on other floors, and the shop can avoid the risk of giving the product to the customer before payment.

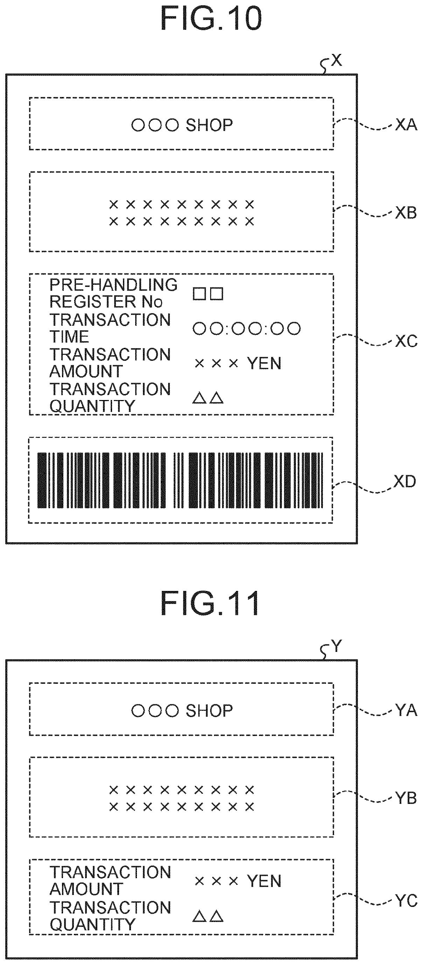

FIG. 10 illustrates the registration receipt X issued at the time of the first pre-handling process. This drawing illustrates details of the registration receipt X illustrated in FIG. 2. A shop name display area XA, an advertisement display area XB, a registration information display area XC, and an accounting code display area XD are formed in the registration receipt X. Note that the registration receipt X may be provided with an area for displaying other information.

In the shop name display area XA, the name of the company or shop that sells the product is printed. In the shop name display area XA, a shop location, a telephone number, an e-mail address, and the like may be printed together. Commercial messages such as bargain information are printed in the advertisement display area XB.

In the registration information display area XC, information regarding the pre-handling process is printed. In the present embodiment, a register number indicating the POS terminal 2 that has performed the pre-handling process, the transaction time indicating the time when the product registration in the pre-handling process has been completed, the transaction amount that is the total price of the products registered in the pre-handling process, and the quantity of transactions indicating the quantity of products registered in the pre-handling process are printed in the registration information display area XC.

In the accounting code display area XD, the barcode indicating the accounting code issued by the POS terminal 2 is printed. The accounting code printed in the accounting code display area XD may be printed with a number or a symbol in addition to or instead of the barcode. In this case, the accounting code is input to the touch panel 23 by the operator operating the POS terminal 2 at the time of the second and subsequent pre-handling processes or at the time of accounting. Note that the registration receipt X is not limited to a receipt printed by the printer 26, and may be a receipt transmitted as electronic data to a mobile terminal of a customer. The same applies to the registration receipt Y and the purchase receipt Z.

Returning to FIG. 9, the operation at the time of the second pre-handling process will be described. When the customer moves to the selling area B, selects the product in the selling area B, and brings the product to be purchased to the POS terminal 2 in the selling area B, the POS terminal 2 first reads the accounting code from the barcode printed on the registration receipt X (Step S11). The POS terminal 2 transmits the accounting code read and the terminal ID stored in the memory unit 21 to the server apparatus 3 (Step S12).

Upon receiving the accounting code, the server apparatus 3 reads the product code corresponding to the accounting code received from the transaction management file 313 (Step S13). The server apparatus 3 transmits the additional registration permission notification and the product code read to the POS terminal 2 specified by the terminal ID received (Step S14).

The POS terminal 2 displays the product code received on a registration screen displayed at the time of performing product registration (Step S15). By displaying the product code received on the registration screen, it is possible to easily perform a registration cancellation process when the customer cancels the purchase of the product registered in the first pre-handling process. The POS terminal 2 executes the product registration of the product in the selling area B to be purchased by the customer, i.e., an additional product to be additionally purchased (Step S16).

Subsequently, the POS terminal 2 associates the product code received from the server apparatus 3 and the product code registered in the POS terminal 2 with the accounting code. As a result, the transaction information including the additional product is generated (Step S17). Then, the POS terminal 2 prints the registration receipt Y (Step S18).

FIG. 11 illustrates the registration receipt Y issued at the time of the second and subsequent pre-handling processes. A shop name display area YA, an advertisement display area YB, and a registration information display area YC are formed in the registration receipt Y. The shop name display area YA and the advertisement display area YB are similar to the shop name display area XA and the advertisement display area XB of the registration receipt X, and thus duplicate description will be omitted. In the registration information display area YC, the transaction amount, which is the total price of all the products registered by that time, and the transaction quantity are printed. The registration receipt Y is different from the registration receipt X in that the information printed in the registration information display area YC is simplified and the accounting code display area is not provided. As a result, the receipt paper for printing can be reduced. Note that the registration receipt Y may be provided with an area for displaying other information.

Returning to FIG. 9, the description of the second and subsequent pre-handling processes will be continued. Following the process in Step S18, the POS terminal 2 transmits the transaction information and the update instruction to the server apparatus 3 (Step S 19). The update instruction requests update of the transaction management file 313 based on the transaction information transmitted together with the update instruction.

The server apparatus 3 updates the transaction information (Step S20). The server apparatus 3 extracts the accounting code included in the transaction information from the transaction management file 313, and updates the transaction information by rewriting the product code registered corresponding to the accounting code with the product code included in the transaction information received from the POS terminal 2. Through the above process, the second and subsequent pre-handling processes are completed.

Next, an operation at the time of accounting will be described. An operation when the customer moves to the selling area C, selects a product in the selling area C, and pays for the product selected and the product registered in the pre-handling process will be described.

Since a process in Steps S21 to S26 executed at the time of accounting is a process for adding information on an additional product to the transaction subjected to the pre-handling process, it is similar to the process in Steps S11 to S16 in the second and subsequent pre-handling processes. Therefore, detailed description of Steps S21 to S26 is omitted.

When the accounting instruction is input (Step S27) after completion of additional product registration in Step S26, the POS terminal 2 in the selling area C that has read the accounting code executes the accounting process (Step S28). When the accounting process is completed, the POS terminal 2 transmits a payment completion notification and transaction information on paid transaction to the server apparatus 3 (Step S29).

The server apparatus 3 extracts the accounting code included in the transaction information from the transaction management file 313, and rewrites the product code registered corresponding to the accounting code with the product code included in the transaction information received from the POS terminal 2. In addition, the server apparatus 3 rewrites the payment flag corresponding to the accounting code included in the transaction information in the transaction management file 313 from "0" to "1". As a result, the server apparatus 3 updates the transaction information (Step S30).

Through the above operation of the registration system 1, in the transaction in which the pre-handling process is performed the plurality of times, payment can be completed using the accounting code issued in the first pre-handling process.

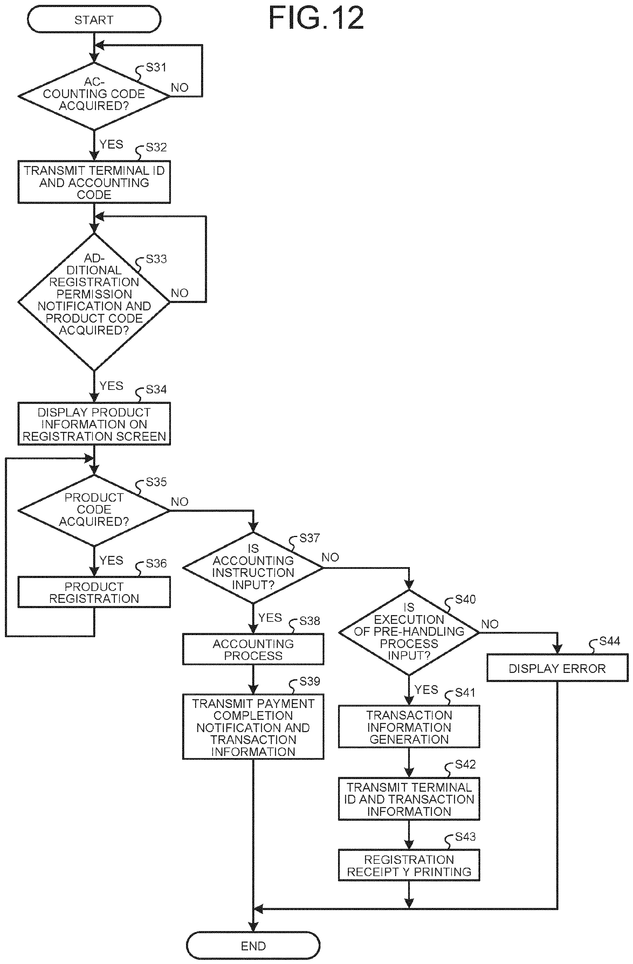

Next, an accounting code reading process executed by the POS terminal 2 after the first pre-handling process will be described. FIG. 12 is a flowchart illustrating a flow of the accounting code reading process by the control unit 20 of the POS terminal 2.

The control unit 20 determines whether the accounting code acquisition unit 2007 has acquired the accounting code (Step S31). When the accounting code is not acquired (N in Step S31), the process returns to Step S31 and stands by. When the accounting code acquisition unit 2007 acquires the accounting code (Y in Step S31), the transmission unit 2005 transmits the accounting code acquired and the terminal ID stored in the memory unit 21 to the server apparatus 3 (Step S32).

Next, the control unit 20 determines whether the reception unit 2006 has received the additional registration permission notification and the product code from the server apparatus 3 (Step S33). When the additional registration permission notification and the product code are not received (N in Step S33), the process returns to Step S33 and stands by. When the reception unit 2006 receives an addition permission notification and the product code from the server apparatus 3 (Y in Step S33), the control unit 20 causes the display 22 to display the product information corresponding to the product code received (Step S34).

Subsequently, the control unit 20 determines whether the identification information acquisition unit 2001 has acquired the product code (Step S35). When the identification information acquisition unit 2001 acquires the product code (Y in Step S35), the registration unit 2002 executes product registration based on the product code acquired by the identification information acquisition unit 2001 (Step S36). Then, the control unit 20 returns the process to Step S35.

When the identification information acquisition unit 2001 does not acquire the product code in the process in Step S35 (N in Step S35), the control unit 20 determines whether an accounting instruction has been input to the touch panel 23 (Step S37). When the accounting instruction is input (Y in Step S37), the accounting process unit 2008 executes the accounting process related to the product registered (Step S38). In other words, when the product code of the additional product is registered in the process in Step S36, the accounting process unit 2008 executes the accounting process based on the product code received by the reception unit 2006 and the product code of the additional product. When the product code of the additional product is not registered in the process in Step S36, the accounting process unit executes the accounting process based on the product code received by the reception unit 2006. The accounting process includes printing of the purchase receipt Z.

Next, the transmission unit 2005 transmits the payment completion notification and the product code of the product subjected to the accounting process to the server apparatus 3 (Step S39). Then, the control unit 20 ends the accounting code reading process.

In the process in Step S37, when the accounting instruction is not input (N in Step S37), the control unit 20 determines whether or not execution of the pre-handling process has been input to the touch panel 23 (Step S40). When the execution of the pre-handling process is input (Y in Step S40), the generation unit 2004 generates the transaction information by associating the product code received by the reception unit 2006 and the product code of the additional product with the accounting code acquired by the accounting code acquisition unit 2007 (Step S41), and stores the transaction information in the registration information storage unit 204.

The transmission unit 2005 transmits the transaction information stored in the registration information storage unit 204 and the terminal ID stored in the memory unit 21 to the server apparatus 3 (Step S42). Subsequently, the control unit 20 prints the registration receipt Y (Step S43), and ends the accounting code reading process.

In the process in Step S40, when the execution of the pre-handling process is not input (N in Step S40), the control unit 20 displays an error on the display 22 (Step S44), and ends the accounting code reading process. The error screen displayed on the display 22 is, for example, a message or the like that prompts the operator operating the POS terminal 2 to perform any one of operations such as reading a product code, inputting an accounting instruction, inputting execution of the pre-handling process, and inputting cancellation of the product code. When the cancellation of the product code is input, the control unit 20 executes a cancellation process for canceling the registered product code.

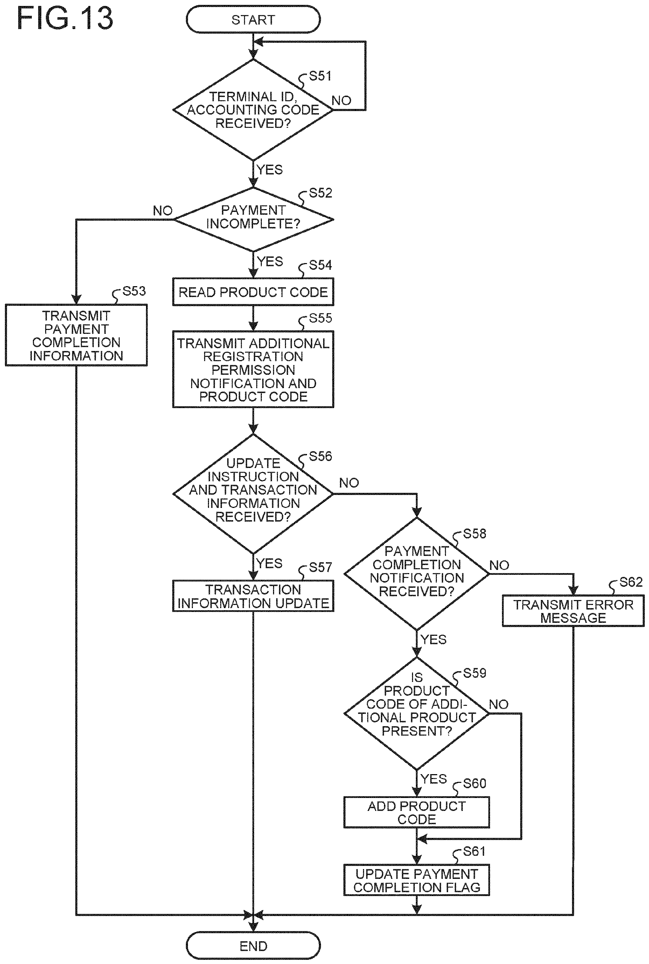

Next, an update process of the transaction management file 313 executed by the server apparatus 3 will be described. FIG. 13 is a flowchart illustrating a flow of the update process by the control unit 30 of the server apparatus 3.

The control unit 30 determines whether the reception unit 3001 has received the terminal ID and the accounting code from the POS terminal 2 (Step S51). When not received (N in Step S51), the process returns to Step S51 and stands by. When the reception unit 3001 receives the terminal ID and the accounting code from the POS terminal 2 (Y in Step S51), the control unit 30 determines whether payment of the transaction specified by the accounting code received is incomplete (Step S52). The control unit 30 refers to the transaction management file 313, and performs determination in Step S52 based on the payment flag corresponding to the accounting code received by the reception unit 3001.

When payment of the transaction specified by the accounting code received by the reception unit 3001 is completed (N in Step S52), the transmission unit 3005 transmits payment completion information to the POS terminal 2 specified by the terminal ID received by the reception unit 3001 (Step S53). Note that, in the following description, transmitting information to the POS terminal 2 specified by the terminal ID received by the reception unit 3001 may be simply referred to as "transmitting to the POS terminal 2". The payment completion information is information indicating that payment of the transaction specified by the accounting code transmitted from the POS terminal 2 to the POS terminal 2 is completed. In other words, the transaction specified by the accounting code is not a transaction in which an additional product can be registered. Then, the control unit 30 ends the update process.

When payment of the transaction specified by the accounting code received by the reception unit 3001 is not completed (Y in Step S52), the reading unit 3002 reads the product code corresponding to the accounting code received by the reception unit 3001 from the transaction management file 313 (Step S54). Subsequently, the transmission unit 3005 transmits the product code read by the reading unit 3002 and the additional registration permission notification to the POS terminal 2 (Step S55).

Next, the control unit 30 determines whether the reception unit 3001 has received the update instruction and the transaction information from the POS terminal 2 (Step S56). When the reception unit 3001 receives the update instruction and the transaction information from the POS terminal 2 (Y in Step S56), the update unit 3004 updates the transaction information registered in the transaction management file 313 (Step S57). The update unit 3004 extracts the accounting code included in the transaction information received by the reception unit 3001 from the transaction management file 313, and rewrites the product code registered corresponding to the accounting code with the product code included in the transaction information. Then, the control unit 30 ends the update process.

In the process in Step S56, when the reception unit 3001 does not receive the update instruction and the transaction information from the POS terminal 2 (N in Step S56), the control unit 30 determines whether the reception unit 3001 has received the payment completion notification from the POS terminal 2 (Step S58). When the reception unit 3001 receives the payment completion notification from the POS terminal 2 (Y in Step S58), the control unit 30 determines whether the transaction information received by the reception unit 3001 together with the payment completion notification includes the product code of the product added at the time of accounting (Step S59). The control unit 30 compares the product code included in the transaction information received by the reception unit 3001 with the registered product code corresponding to the accounting code included in the transaction information in the transaction management file 313, thereby making the determination in Step S59.

When the transaction information received by the reception unit 3001 includes the product code of the product added at the time of accounting (Y in Step S59), the update unit 3004 adds the product code of the product added to the item of the product code corresponding to the accounting code included in the transaction information received in the transaction management file 313 by the reception unit 3001 (Step S60). Subsequently, the update unit 3004 rewrites the item of the payment flag corresponding to the accounting code from "0" to "1" (Step S61). Then, the control unit 30 ends the update process.

When the reception unit 3001 does not receive the payment completion notification in the process in Step S58 (N in Step S58), the transmission unit 3005 transmits an error message to the POS terminal 2 (Step S62). Then, the control unit 30 ends the update process.

In addition, in the process in Step S59, when there is no product code of the additional product (N in Step S59), the control unit 30 skips the process in Step S60 and proceeds to the process in Step S61.

### (Modification)

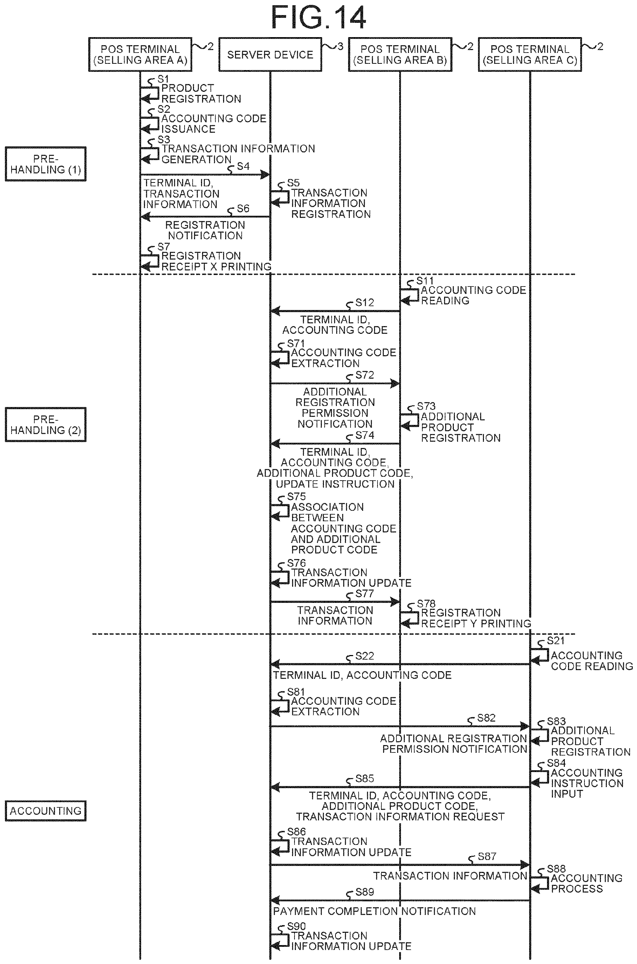

Next, a modification of the registration system 1 will be described. The modification described below is different from the above-described embodiment in that the issued accounting code is associated with the product code of the additional product at the time of the second and subsequent pre-handling processes or accounting. In other words, the server apparatus 3 generates the transaction information including the additional product. FIG. 14 is a sequence chart illustrating a flow of operation of the modification corresponding to FIG. 9. Note that processes similar to those in FIG. 9 are denoted by the same reference numerals, and description thereof may be omitted. This is to avoid unnecessary redundancy of the following description and to facilitate understanding of those skilled in the art.

Since the processes by the POS terminal 2 and the server apparatus 3 at the time of the first pre-handling process (Steps S1 to S7) are similar to those in FIG. 9, redundant description will be omitted.

In the second and subsequent pre-handling processes, the processes in Steps S11 and S12 are similar to those in FIG. 9. When the server apparatus 3 receives the terminal ID and the accounting code from the POS terminal 2, the server apparatus 3 extracts the accounting code from the transaction management file 313 (Step S71), confirms that the transaction is an unpaid transaction, and transmits an additional registration permission notification to the POS terminal 2 (Step S72). When the transaction specified by the accounting code received has been paid or is not managed by the transaction management file 313, the server apparatus 3 transmits an error message to the POS terminal 2.

The POS terminal 2 receiving the additional registration permission notification executes product registration of the additional product (Step S73). Subsequently, the POS terminal 2 transmits the terminal ID, the accounting code read, the product code of the additional product, and the update instruction to the server apparatus 3 (Step S74).

The server apparatus 3 associates the accounting code with the product code of the additional product (Step S75). As a result, the transaction information in which the product code registered in the first pre-handling process and the product code of the additional product are associated with the accounting code is generated. The server apparatus 3 updates the transaction information by rewriting the product code registered corresponding to the accounting code in the transaction management file 313 with the product code included in the transaction information generated (Step S76). Then, the server apparatus 3 transmits the transaction information to the POS terminal 2.

When the POS terminal 2 receives the transaction information, the POS terminal 2 prints and issues the registration receipt Y based on the transaction information. Through the above process, the second and subsequent pre-handling processes are completed.

Next, an operation at the time of accounting will be described. In the process by the POS terminal 2 and the server apparatus 3 at the time of accounting, processes in Steps S21 and S22 are similar to those in FIG. 9. In addition, processes in Steps S81 to S83 are similar to Steps S71 to S73 at the time of the second and subsequent pre-handling processes.

After the product registration of the additional product, an accounting instruction is input to the POS terminal 2 (Step S84). Note that, when the customer does not purchase the additional product, the accounting instruction is input without performing the product registration of the additional product. Subsequently, the POS terminal 2 transmits the terminal ID, the accounting code read, the product code of the additional product, and a transaction information request to the server apparatus 3 (Step S85).

The server apparatus 3 updates the transaction information in the transaction management file 313 based on the accounting code and the product code of the additional product (Step S86), and transmits the updated transaction information to the POS terminal 2 as transaction information for payment (Step S87).

The POS terminal 2 executes the accounting process based on the transaction information received (Step S88), and transmits the payment completion notification to the server apparatus 3 when payment is completed (Step S89).

Upon receiving the payment completion notification, the server apparatus 3 refers to the transaction management file 313, rewrites the payment flag corresponding to the accounting code included in the payment completion notification from "0" to "1", and updates the transaction information (Step S90).

Through the above operation of the registration system 1, similarly to the above-described embodiment, payment can be completed using the accounting code issued in the first pre-handling process in the transaction in which the pre-handling process is performed the plurality of times.

As described above, the POS terminal 2 according to the embodiment includes the accounting code acquisition unit 2007 that acquires the accounting code associated with the product code of the transaction target product, the identification information acquisition unit 2001 that acquires the product code of the additional product to be added to the transaction corresponding to the accounting code acquired by the accounting code acquisition unit 2007, and the registration unit 2002 that stores, in the registration information storage unit 204, the transaction information in which the accounting code acquired by the accounting code acquisition unit 2007 is associated with the product code of the additional product acquired by the identification information acquisition unit 2001.

As a result, when the pre-handling process is performed the plurality of times in one transaction, the second and subsequent pre-handling processes can be performed using the accounting code issued first. Therefore, it is possible to suppress an erroneous operation at the time of accounting due to issuance of a plurality of accounting codes for one transaction.

In addition, the registration system 1 according to the embodiment includes the POS terminal 2 that registers the product code of the transaction target product, and the server apparatus 3 that manages the transaction management file 313 in which the product code registered by the POS terminal 2 is associated with the accounting code set for each transaction. The POS terminal 2 includes the accounting code acquisition unit 2007 that acquires the accounting code associated with the product code of the transaction target product, the reception unit 2006 that receives the product code corresponding to the accounting code acquired by the accounting code acquisition unit 2007 from the server apparatus 3, the identification information acquisition unit 2001 that acquires the product code input to the touch panel 23 or the scanner 24, and the transmission unit that transmits the accounting code acquired by the accounting code acquisition unit 2007, the product code received by the reception unit 2006, and the product code acquired by the identification information acquisition unit 2001 to the server apparatus 3. The server apparatus 3 includes the update unit 3004 that updates the transaction management file 313 based on the accounting code and the product code transmitted from the transmission unit 2005.

As a result, it is possible to provide a registration system capable of performing the second and subsequent pre-handling processes using the accounting code issued first. An erroneous operation at the time of accounting due to issuance of a plurality of accounting codes for one transaction can be suppressed. Further, since the POS terminal 2 receives the product code already associated with the transaction management file 313 from the server apparatus 3 when registering the product code of the additional product, the POS terminal 2 can also perform the cancellation process of the registered product code received. Therefore, according to the registration system 1 of the embodiment, the product code cancellation operation in the POS terminal 2 can be facilitated.

Furthermore, the registration apparatus in the registration system 1 of the embodiment is the POS terminal 2 provided with the accounting process unit 2008 that executes the accounting process based on the product code received by the reception unit 2006.

As a result, at the time of the second and subsequent pre-handling processes, the accounting process can be executed together with the registration process. Therefore, customer convenience can be improved.

In addition, the POS terminal 2 in the registration system 1 according to the embodiment further includes the generation unit 2004 that generates the transaction information in which the accounting code acquired by the accounting code acquisition unit 2007 is associated with the product code received by the reception unit 2006 and the product code acquired by the identification information acquisition unit 2001.

As a result, the transaction information generated by the generation unit 2004 as the information for updating the transaction management file 313 of the server apparatus 3 can be utilized when the POS terminal 2 performs the accounting process. In other words, since the transaction information is generated by the POS terminal 2 instead of the server apparatus 3, when accounting is performed at the time of the second and subsequent pre-handling processes, there is no need to request the server apparatus 3 for the transaction information for performing the accounting process. The process is simplified.

Furthermore, the registration system 1 according to the embodiment includes the POS terminal 2 that registers the product code of the transaction target product, and the server apparatus 3 that manages the transaction management file 313 in which the product code registered by the POS terminal 2 is associated with the accounting code set for each transaction. The POS terminal 2 includes the accounting code acquisition unit 2007 that acquires the accounting code associated with the product code of the transaction target product, the identification information acquisition unit 2001 that acquires the product code input to the touch panel 23 or the scanner 24, and the transmission unit 2005 that transmits the accounting code acquired by the accounting code acquisition unit 2007 and the product code acquired by the identification information acquisition unit 2001 to the server apparatus 3. The server apparatus 3 includes the update unit 3004 that adds the product code transmitted from the transmission unit 2005 to the product code corresponding to the accounting code transmitted from the transmission unit 2005 to update the transaction management file 313.

As a result, it is possible to provide a registration system capable of performing the second and subsequent pre-handling processes using the accounting code issued first. An erroneous operation at the time of accounting due to issuance of a plurality of accounting codes for one transaction can be suppressed.

In the above embodiment, the control program executed by the POS terminal 2 and the server apparatus 3 may be provided by being recorded in a computer-readable recording medium such as a CD-ROM. Further, the control program executed by the POS terminal 2 and the server apparatus 3 of the above embodiment may be configured to be stored on a computer connected to a network such as the Internet and provided by being downloaded via the network, or may be configured to be provided via the network such as the Internet.

Although the embodiment of the present invention has been described above, the embodiment is presented as an example, and is not intended to limit the scope of the invention. This embodiment can be implemented in various other forms, and various omissions, substitutions, and changes can be made without departing from the gist of the invention.

### CITATION LIST

### Patent Literature

Patent Literature 1: JP 2021-2405 A

## Claims

1. An information processing apparatus comprising:
a transaction specifying information acquisition unit configured to acquire transaction specifying information associated with product identification information of a transaction target product;
an identification information acquisition unit configured to acquire product identification information of an additional product to be added to a transaction corresponding to the transaction specifying information acquired by the transaction specifying information acquisition unit; and
a storage processing unit configured to store, in a storage unit, transaction information in which the transaction specifying information acquired by the transaction specifying information acquisition unit is associated with the product identification information of the additional product acquired by the identification information acquisition unit.

2. A registration system comprising: a registration apparatus configured to register product identification information of a transaction target product; and a server apparatus configured to manage transaction information in which the product identification information registered by the registration apparatus is associated with transaction specifying information set for each transaction, wherein
the registration apparatus includes:
a transaction specifying information acquisition unit that acquires transaction specifying information associated with the product identification information of the transaction target product,
a reception unit that receives, from the server apparatus, the product identification information corresponding to the transaction specifying information acquired by the transaction specifying information acquisition unit,
an identification information acquisition unit that acquires product identification information input to an input device, and
a transmission unit that transmits, to the server apparatus, the transaction specifying information acquired by the transaction specifying information acquisition unit, the product identification information received by the reception unit, and the product identification information acquired by the identification information acquisition unit, and
the server apparatus includes:
an update unit that updates the transaction information based on the transaction specifying information and the product identification information transmitted from the transmission unit.

3. The registration system according to claim 2, wherein
the registration apparatus further includes an accounting process unit that executes an accounting process based on the product identification information received by the reception unit.

4. The registration system according to claim 3, wherein
the registration apparatus further includes a generation unit that generates transaction information in which the product identification information received by the reception unit and the product identification information acquired by the identification information acquisition unit are associated with the transaction specifying information acquired by the transaction specifying information acquisition unit.

5. A registration system comprising: a registration apparatus configured to register product identification information of a transaction target product; and a server apparatus configured to manage transaction information in which the product identification information registered by the registration apparatus is associated with transaction specifying information set for each transaction, wherein
the registration apparatus includes:
a transaction specifying information acquisition unit that acquires transaction specifying information associated with the product identification information of the transaction target product,
an identification information acquisition unit that acquires product identification information input to an input device, and
a transmission unit that transmits, to the server apparatus, the transaction specifying information acquired by the transaction specifying information acquisition unit and the product identification information acquired by the identification information acquisition unit, and
the server apparatus includes
an update unit that updates the transaction information by adding the product identification information transmitted from the transmission unit to the product identification information corresponding to the transaction specifying information transmitted from the transmission unit.

6. A program causing a computer to control an information processing apparatus, the program causing the computer to function as:
a transaction specifying information acquisition unit configured to acquire transaction specifying information associated with product identification information of a transaction target product;
an identification information acquisition unit configured to acquire product identification information of an additional product to be added to a transaction corresponding to the transaction specifying information acquired by the transaction specifying information acquisition unit; and
a storage processing unit configured to store, in a storage unit, transaction information in which the transaction specifying information acquired by the transaction specifying information acquisition unit is associated with the product identification information of the additional product acquired by the identification information acquisition unit.
